# EUROPÄISCHE PATENTSCHRIFT

(11) **EP 1 072 561 B1**
(45) Veröffentlichungstag und Bekanntmachung des Hinweises auf die Patenterteilung: **17.01.2007**
(21) Anmeldenummer: 00115987.0
(22) Anmeldetag: 26.07.2000
(51) Int. Cl.: C03B 5/187, C03B 7/092, B01F 7/00

(54) **Verwendung einer Vorrichtung zum Auflösen von Schlieren in einer Glasschmelze**
Use of a mixer for preventing reams in a glass melt
Utilisation d'un dispositif pour éviter des ondes dans le verre en fusion

(30) Priorität: 29.07.1999 DE 19935686
(43) Veröffentlichungstag der Anmeldung: 31.01.2001
(73) Patentinhaber: Schott AG, 55122 Mainz (DE)
(72) Erfinder: Dick, Erhard, 95666 Mitterteich (DE); Fischer, Erich, 95666 Mitterteich (DE); Fuchs, Roland, 95666 Mitterteich (DE)
(74) Vertreter: Dr. Weitzel & Partner

(56) Entgegenhaltungen:
- EP-A- 0 148 324
- WO-A-93/02975
- WO-A-93/02976
- WO-A-96/15071
- DD-A- 298 767
- DE-A- 1 812 657
- DE-A- 3 327 137
- DE-B- 1 069 345
- US-A- 3 926 654
- PATENT ABSTRACTS OF JAPAN vol. 15, no. 302, 2. August 1991 (1991-08-02) & JP 03 112819 A (TANAKA KIKINZOKU KOGYO CO LTD), 14. Mai 1991 (1991-05-14)
- PATENT ABSTRACTS OF JAPAN vol. 18, no. 61, 2. Februar 1994 (1994-02-02) -& JP 05 279047 A (OLYMPUS OPTICAL CO LTD), 26. Oktober 1993 (1993-10-26)

## Beschreibung

Die Erfindung betrifft das Behandeln einer Glasschmelze. Dabei werden Vorrichtungen verwendet, die häufig Bestandteil von Anlagen für das Erschmelzen, die Kristallisation oder das Läutern von anorganischen Substanzen sind, vor allem von Glas. Eine solche Anlage umfaßt im allgemeinen eine Schmelzwanne, einer dieser nachgeschaltete Läuterwanne sowie die hier in Rede stehende Vorrichtung, die dem Auflösen von Schlieren oder dem Konditionieren dient.

Ein hierbei angewandte Vorrichtung umfaßt als wesentliche Bestandteile einen Rührbehälter, zum Beispiel einen Tiegel sowie einen Rührer, der in das im Rührbehälter befindliche Bad eintaucht.

Der Rührer ist stabförmig und im allgemeinen vertikal angeordnet. Er umfaßt einen Schaft sowie in seinem unteren Bereich einen Kern, der in der Regel völlig von der Schmelze umgeben ist. Der Kern ist im allgemeinen mit Rührerflügeln bestückt.

Zum Beseitigen von Schlieren aus einer Glasschmelze wurde schone eine Vorrichtung verwendet, die in DE-A-1 069 345 beschrieben ist. Mit einer solchen Vorrichtung sollen das Entstehen von Schlieren verhindert, oder bereits entstandene Schlieren in einer Glasschmelze wieder aufgelöst werden.

Die Vorrichtung ist jedoch relativ aufwendig. Sie bringt außerdem nicht den gewünschten technischen Effekt herbei.

Der Erfindung liegt die Aufgabe zugrunde, eine Vorrichtung anzugeben, die geeignet ist ein fließfähigers Medium, insbesondere eine Glasschmelze derart zu behandeln, daß das Konditionieren, Homogenisieren und Beseitigen von Schlieren - besser erfüllt wird, als bei bekannten Vorrichtungen. Außerdem soll die Vorrichtung In geringerem Maße als bekannte Vorrichtungen den mechanischen Beanspruchungen ausgesetzt sein.

Diese Aufgabe wird durch die Merkmale von Anspruch 1 gelöst. Die Erfinder haben folgendes erkannt:

Durch die erfindungsgemäße Verwendung wird folgendes erreicht; die Geschwindigkeit des Schmelzflusses zwischen dem Eintritt in die Rührzone und dem Austritt aus der Rührzone nimmt ständig zu. Die Schmelze wird somit laufend beschleunigt. Die Geschwindigkeit im Rührerspalt zwischen Rührerkern und Wandung des Rührbehälters steigt damit stetig an, so daß die Schmelze beim Verlassen der Rührzone schlierenarm ist. Es stellt sich somit ein deutlich verbessertes Ergebnis ein.

Eine erfindungsgemäß Verwendung hat jedoch auch die weiteren Vorteile:
* Geringere Reboilanfälligkeit
   (Reboilanfälligkeit ist direkt proportional der Rührerdrehzahl).
* Geringere Anfälligkeit des Rührers (bei Edelmetall-Rührteilen) gegen Deformation bei eintretenden Störungen durch ankommende Fremdkörper.
* Deutliche geringere Deformation der Rührerflügel.
* Längere Laufzeiten der eingesetzten Rührer.
* Minimierte Sogwirkung des Rührers von der Tiegeloberfläche.
* Geringere Belastung der Rührerlager und der Antriebe.
* Geringerer Energieaufwand.

Die Erfindung ist anhand der Zeichnung näher erläutert.
- Figur 1: zeigt eine Anlage zum Erschmelzen, Läutern und Konditionieren von Glas In einer schematischen Darstellung mit einer erfindungsgemäßen Rührvorrichtung.
- Figur 2: zeigt die in Figur 1 enthaltene Rührvorrichtung mit im Rührbehälter befindlicher Schmelze in schematischer Darstellung.
- Figur 3: zeigt den in Figur 2 enthaltenen Rührer In etwas genauerer Darstellung.
- Figur 4: veranschaulicht den Verlauf des Ringraumquerschnittes vom Spiegel der Schmelze bis zum Boden.
- Figur 5: veranschaulicht den Verlauf der Geschwindigkeit der Schmelze vom Spiegel bis zum Boden.

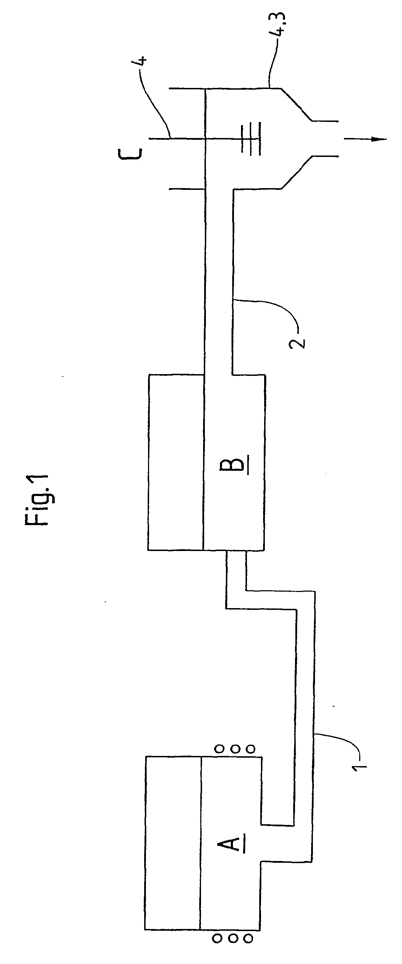

Die in Figur 1 gezeigte Anlage umfaßt einen Schmelztiegel A, einen Läutertlegel B sowie eine erfindungsgemäße Rührvorrichtung C.

Im Schmelztiegel A wird in üblicher Weise sogenanntes Gemenge oder Glasscherben oder beides eingetragen und erschmolzen. Die Schmelze wird sodann mittels einer Rinne 1 zum Läutertiegel B überführt, und von dort über eine Rinne 2 zur Rührvorrichtung C. Die Rührvorrichtung dient dem Homogenisieren, Konditionieren und Beseitigen von Schlieren. Die Rührvorrichtung C umfaßt einen Rührer 4 sowie einen Rührbehälter 4.3.

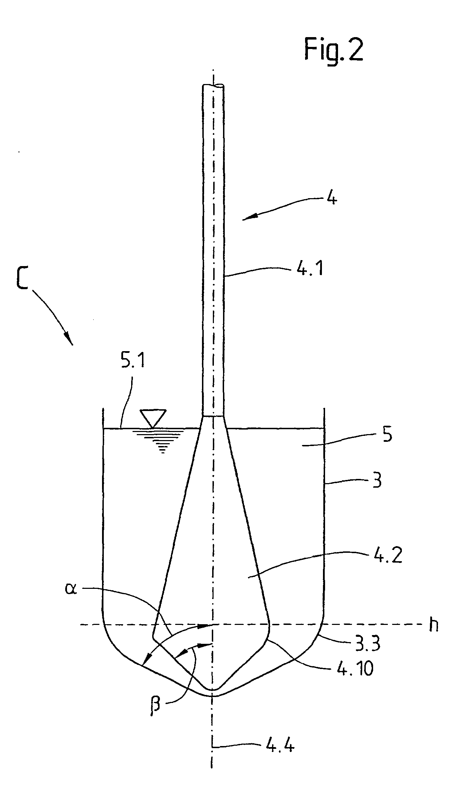

Aus Figur 2 erkennt man den Aufbau der Rührvorrichtung etwas genauer. Der Rührer 4 weist einen Schaft 4.1 sowie einen Rührerkern 4.2 auf. Der Rührer 4 ist vertikal angeordnet. Er könnte auch gegen die Vertikale geneigt sein. Im vorliegenden Falle befindet sich der Rührkern 4.2 unten. Er taucht vollständig in eine Schmelze 5 ein.

Der hier nicht dargestellte Zulauf von Schmelze zum Rührbehälter 4.3 befindet sich im Bereich des Spiegels 5.1 Der hier nicht dargestellte Auslauf der Schmelze aus dem Rührbehälter 4.3 befindet sich im unteren Scheitelpunkt des Rührbehälters 4.3.

Entscheidend ist der Verlauf der schmelzeberührten Wandung des Rührbehälters 4.3 einerseits sowie der schmelzeberührten Umfangsfläche des Rührkernes 4.2. Die Rührzone hat, wie man sieht, eine gewisse Weite, in horizontaler Richtung gemessen. Die Weite der Rührzone (Ringraumquerschnitt) ist im Bereich des Spiegels 5.1 der Schmelze 5 am größten.

Die Wandung des Rührbehälters 4.3 ist bis zur Höhe h - gestrichelt dargestellt - zylindrisch. Der Rührkern 4.2 erweitert sich jedoch vom Spiegel aus bis zur Höhe h kegelstumpfartig. Deswegen nimmt der Ringraumquerschnitt bis zur Höhe h stetig ab.

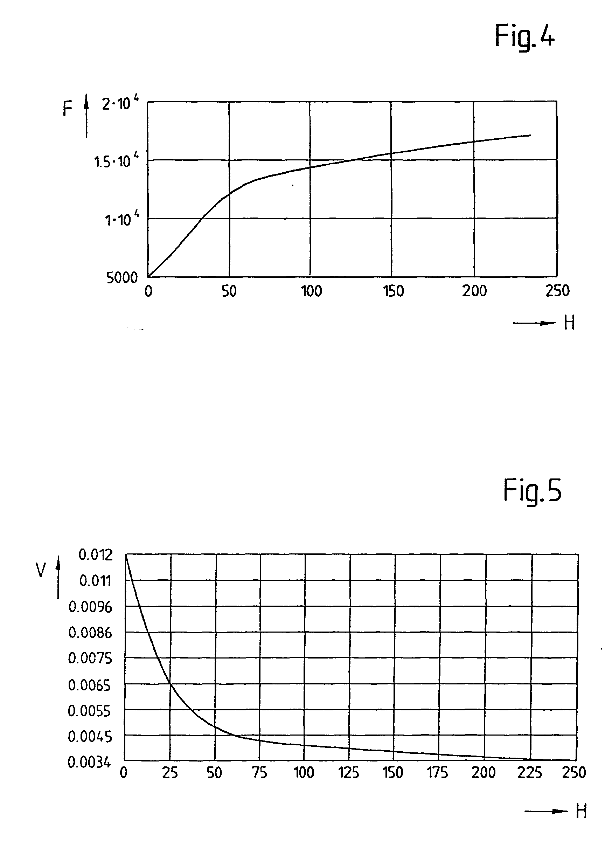

Unterhalb der Höhe h haben sowohl der Rührerkern 4.2 als auch die Wandung des Rührbehälters 4.3 eine kegelstumpfartige Gestalt. Die beiden Konturen sind an der Stelle 4.10 beziehungsweise 3.3 nach innen eingezogen. Dabei bildet die Kontur der Behälterwandung 3 mit der Längsachse 4.4 des Rührers 4 einen Winkel α und die Außenwandung des Rührkernes 4.2 mit der Längsachse 4.4 einen Winkel β. Der Winkel β ist deutlich kleiner als der Winkel α. Dabei sind die beiden Teile - Wandung des Rührbehälters 4.3 und Rührerkern 4.2 - derart gestaltet, daß auch unterhalb der Höhenlinie h eine stetige Verringerung des Ringraumquerschnittes stattfindet. Hierauf soll in den Figuren 4 und 5 im einzelnen eingegangen werden.

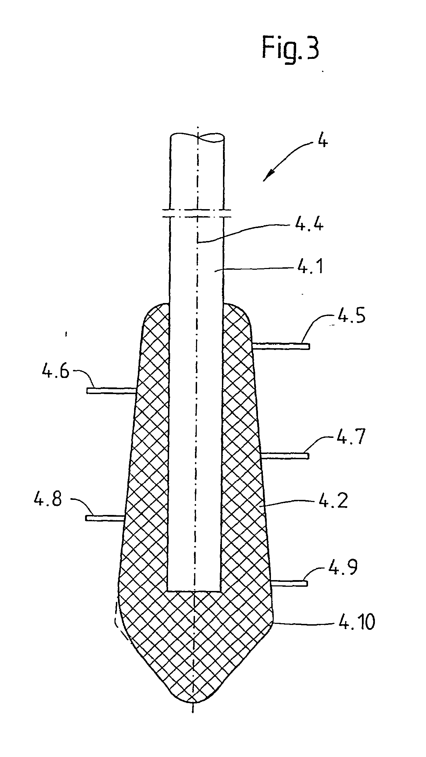

Aus Figur 3 sind Einzelheiten des Rührers 4 erkennbar. Wie man sieht, ist der Rührkern 4.2 mit einer Anzahl von Rührflügeln 4.5 bis 4.9 ausgestattet. Im vorliegenden Falle sind diese Rührflügel in horizontalen Ebenen, das heißt senkrecht zur Rührerachse 4.4 angeordnet. Sie könnten jedoch auch unter anderen Winkeln gegen die Rührerachse 4.4 verlaufen. Sie sind außerdem entlang der Achse 4.4 gegeneinander versetzt angeordnet. Auch hier wären andere Anordnungen denkbar.

In Figur 4 ist der Verlauf des Ringraumquerschnittes dargestellt, und in Figur 5 der Verlauf der Geschwindigkeit der Schmelze.

Dabei ist in den beiden Diagrammen auf der Abzisse jeweils die Höhe H der Schmelze dargestellt. Dies bedeutet folgendes: die Verhältnisse im Bereich des Spiegels der Schmelze sind aus den rechten Enden der beiden Kurven ersichtlich, und die Verhältnisse im Auslaufbereich aus dem Rührbehälter 4.3, das heißt im Bereich von dessen Boden, aus den linken Enden der beiden Kurven.

Wie man aus Figur 4 erkennt, nimmt der Ringraumquerschnitt F in der dort gezeigten Kurve vom Spiegel bis zum Boden ständig ab. Dabei weist die Kurve an einer bestimmten Stelle eine stärkere Krümmung auf.

Bei Figur 5 nimmt die Geschwindigkeit v der Schmelze vom rechten Ende der Kurve bis zum linken Ende der Kurve ständig zu. Auch hier ist an einer bestimmten Stelle eine etwas stärkere Krümmung zu erkennen. Die stärkeren Krümmungen der beiden Stellen entsprechen den Stellen 3.3 und 4.10 In Figur 2, das heißt dem Bereich der Höhenlinie h.

## Patentansprüche

1. Verwendung einer Vorrichtung zum Durchrühren, Homogenisieren und Konditionieren einer Glasschmelze, wobei die Vorrichtung mit die folgenden Bauteile bzw. Merkmale aufweist.
1.1 einen stabförmigen Rührer (4), der einen Schaft (4.1) sowie einen mediumberührten Rührerkern (4.2) aufweist;
1.2 einen Rührbehälter (4.3), der den Rührerkern (4.2) unter Belassen eines Ringraumes umschließt;
1.3 der Rührbehälter (4.3) weist einen Zulauf und einen Auslauf auf, die in verschiedenen, zur Längsachse (4.4) des Rührers (4) verlaufenden Ebenen liegen;
1.4 die mediumberührten Flächen der Wandung des Rührbehälters (4.3) und des Rührerkernes (4.2) sind derart gestaltet, daß sich die Weite des durchströmten Ringraumes beginnend im Spiegel (5.1) der Schmelze (5) in Strömungsrichtung stetig verjüngt.

2. Verwendung nach Anspruch 1, **dadurch gekennzeichnet, daß** der Rührbehälter (4.3) auf einem wesentlichen Teil der durchströmten Strecke zylindrisch ist, und daß der Rührerkern (4.2) entlang dem zylindrischen Teil des Rührbehälters (4.3) die Gestalt eines sich erweiternden Konus hat.

3. Verwendung nach Anspruch 1, **dadurch gekennzeichnet, daß** sich die Wandung des Rührbehälters (4.3) sowie die Außenkontur des Rührkerns (4.2) im Auslaufbereich des Rührbehälters (4.3) konisch verjüngen.

4. Verwendung nach einem der Ansprüche 1 bis 3, **dadurch gekennzeichnet, daß** der Rührerkern (4.2) Rührerflügel (4.5 bis 4.9) aufweist.

## Claims

1. The use of an apparatus for stirring, homogenizing and conditioning a glass melt, with the apparatus comprising the following components or features:
1.1 a rod-like stirrer (4) comprising a shaft (4.1) and a medium-contacted stirrer core (4.2);
1.2 a stirring container (4.3) which encloses the stirrer core (4.2) by leaving an annular cavity;
1.3 the stirring container (4.3) comprises an inlet and an outlet situated in different planes extending relative to the longitudinal axis (4.4) of the stirrer (4);
1.4 the medium-contacted surfaces of the walls of the stirring container (4.3) and the stirrer core (4.2) are arranged in such a way that the width of the annular cavity that is flowed through continuously tapers starting in the filling level (5.1) of the melt (5).

2. The use according to claim 1, **characterized in that** the stirring container (4.3) is cylindrical over a relevant part of the section which is flowed through, and that the stirrer core (4.2) has the shape of an expanding cone along the cylindrical part of the stirring container (4.3).

3. The use according to claim 1, **characterized in that** the walls of the stirring container (4.3) and the outside shape of the stirrer core (4.2) taper conically in the outlet section of the stirring container (4.3).

4. The use according to one of the claims 1 to 3, **characterized in that** the stirrer core (4.2) comprises stirring wings (4.5 to 4.9).

## Revendications

1. Utilisation d'un dispositif pour mélanger, homogénéiser et conditionner du verre en fusion, ce dispositif ayant les pièces, voire les particularités suivantes :
1.1 un agitateur (4) en forme de baguette qui comporte une tige (4.1) ainsi qu'un noyau (4.2) d'agitateur en contact avec le fluide ;
1.2 une cuve (4.3) à agitateur qui entoure le noyau (4.2) d'agitateur en ménageant une enceinte annulaire ;
1.3 la cuve (4.3) à agitateur comporte une entrée et une sortie qui sont situées à différents niveaux s'étendant vers l'axe longitudinal (4.4) de l'agitateur (4) ;
1.4 les surfaces en contact avec le fluide de la paroi de la cuve (4.3) à agitateur et du noyau (4.2) de l'agitateur sont conformées de telle sorte que la largeur de l'enceinte annulaire parcourue par le fluide s'amincit continuellement dans le sens de l'écoulement à partir du niveau (5.1) de la masse en fusion (5).

2. Utilisation selon la revendication 1, **caractérisée en ce que** la cuve (4.3) à agitateur est cylindrique sur la plus grande partie de la distance parcourue par le fluide et que le noyau (4.2) de l'agitateur présente la forme d'un cône allant s'élargissant le long de la partie cylindrique de la cuve (4.3) à agitateur.

3. Utilisation selon la revendication 1, **caractérisée en ce que** la paroi de la cuve (4.3) à agitateur ainsi que le contour extérieur du noyau (4.2) de l'agitateur s'amincissent à la hauteur de la sortie de la cuve (4.3) à agitateur.

4. Utilisation selon l'une quelconque des revendications 1 à 3, **caractérisée en ce que** le noyau (4.2) de l'agitateur comporte des pales (4.5 à 4.9).
